# EUROPEAN PATENT SPECIFICATION

(11) **EP 1 924 028 B1**
(45) Date of publication and mention of the grant of the patent: **09.06.2010**
(21) Application number: 07710972.6
(22) Date of filing: 15.02.2007
(51) Int. Cl.: H04L 12/56

(54) **METHOD AND SYSTEM FOR PROVIDING QOS SERVICE**
VERFAHREN UND SYSTEM ZUR BEREITSTELLUNG EINES SERVICEQUALITÄTSDIENSTES
PROCÉDÉ ET SYSTÈME DESTINÉS À FOURNIR UN SERVICE QoS

(30) Priority: 21.02.2006 CN 200610033907
(43) Date of publication of application: 21.05.2008
(73) Proprietor: Huawei Technologies Co., Ltd., Longgang District, Shenzhen Guangdong 518129 (CN)
(72) Inventor: LI, Hejun, Guangdong 518129 (CN)
(74) Representative: Körber, Martin Hans
(86) International application number: PCT/CN2007/000553
(87) International publication number: WO 2007/095854

(56) References cited:
- WO-A2-2005/115085
- CN-A- 1 486 019
- KR-A- 20050 067 322
- JENNINGS B ET AL: "A self-adaptive service provisioning framework for 3G+/4G mobile applications" IEEE WIRELESS COMMUNICATIONS, IEEE SERVICE CENTER, PISCATAWAY, NJ, US, vol. 11, no. 5, 1 October 2004 (2004-10-01), pages 48-56, XP011121405 ISSN: 1536-1284
- CHAKPIAVORTY R ET AL: "A framework for dynamic SLA-based QoS control for UMTS" IEEE PERSONAL COMMUNICATIONS, IEEE COMMUNICATIONS SOCIETY, US, vol. 10, no. 5, 1 October 2003 (2003-10-01), pages 30-37, XP011102952 ISSN: 1070-9916
- ARANITI G ET AL: "Adaptively controlling the qos of multimedia wireless applications through user profiling techniques" IEEE JOURNAL ON SELECTED AREAS IN COMMUNICATIONS, IEEE SERVICE CENTER, PISCATAWAY, US, vol. 21, no. 10, 1 December 2003 (2003-12-01), pages 1546-1556, XP011104237 ISSN: 0733-8716
- CHAE-SUB LEE ET AL: "Next Generation Network Standards in ITU-T" BROADBAND CONVERGENCE NETWORKS, 2006. BCN 2006. THE 1ST INTERNATIONAL WORKSHOP ON VANCOUVER, CANADA 07-07 APRIL 2006, PISCATAWAY, NJ, USA,IEEE, 1 January 2006 (2006-01-01), pages 1-15, XP031101753 ISBN: 978-1-4244-0146-8

## Description

This application claims the priority of Chinese patent application No. 200610033907.3 submitted with the State Intellectual Property Office of P.R.C. on February 21, 2006, entitled "A Method and System for Providing QoS Service".

### Field of the Invention

The invention relates to the technical, field of network communications, and in particular, to a method and system for providing Quality of Service (QoS) service.

### Background of the Invention

With the development of communication technologies, the Next Generation Network (NGN) and Internet Protocol Multimedia Subsystem (IMS) have found broad application. One major trend is to carry services, such as voice, image, video and data over Internet Protocol (IP) networks, whereupon there emerge a number of protocols supporting the multimedia applications over IP networks. These protocols, together with other protocols, are utilized to constitute a complete multimedia communication system. With the gradual exuberance of real-time multimedia services, ensuring the bandwidth of legal users while limiting the bandwidth of illegal users is becoming very important.

In the existing techniques, in order to provide QoS services, a conventional stream classification method is generally employed to identify different data streams so as to process the data streams differently.

In the stream classification method according to the prior art, the Access Control List (ACL) classification rules are configured, packets are classified according to the classification rules and identified according to the result of the classification, and then provided to the subsequent QoS mechanism, such as Committed Access Rate (CAR), congestion management, bandwidth guarantee and the like. This method is suitable to uniformly limiting the bandwidth of IP packets in compliance with the configured rules.

In a simple stream classification, a packet is typically classified according to the Type of Service (TOS) field domain in the IP packet header. With the application of DifferServ model, the ToS domain of IP is redefined as Differentiated Service (DS) domain, which is referred to as DS Code Pointer (DSCP) domain.

In a complicated stream classification, a packet is classified according to a number of properties of the packet, typically 5 feature domains of the IP packet itself, i.e. IP destination address, IP source address, protocol type of the payload carried in IP packet, destination port of Transfer Control Protocol (TCP) or User Datagram Protocol (UDP), and source port of TCP or UDP. In the prior art, there also exists a stream classification method employing sextet, in which a DSCP domain is added on the basis of the above described quintuple.

Figure 1 shows a QoS system based on stream classification in the prior art. The system is divided into a control layer and a forwarding layer. The control layer includes a network management station or control station 111, and a stream classification rules management module 112. The forwarding layer includes a look-up module 121, a CAR module 122, a DSCP remark module 123, and a bandwidth guarantee module 124.

Figure 2 shows the operation flow of the QoS system based on stream classification in the prior art, which includes:

Block 210:

A user configures stream classification rules and QoS parameter information corresponding to the stream classification rules via the network management station or control station. The stream classification rules management module of the control layer receives and processes the information, and delivers the stream classification rules and QoS parameter information corresponding to the stream classification rules to the forwarding layer.

Block 220:

The forwarding layer receives a packet, searches for stream classification rules corresponding to the packet, and performs bandwidth limitation and DSCP remark after the matched configured rules have been found.

Block 230:

A corresponding bandwidth guarantee is performed according to the result of the DSCP remark.

In the prior art, it is impossible to configure ACL classification rules for each user respectively, accordingly it is impossible to perform differentiated bandwidth limitation and bandwidth guarantee for different users. This is because a user is determined uniquely by an IP address and a TCP or UDP source port in an IP network. The number of the source port is assigned to the user each time the user initiates a call or each time the user responds to a call. In other words, the number of the source port can not be known in advance. Therefore, it is impossible to configure ACL classification rules for each user respectively. In addition, there may be a number of users that are in compliance with the same ACL stream classification rules, and in the above described solution the bandwidth of all the users that are in compliance with the ACL stream classification rule is limited uniformly. Accordingly, the bandwidth of a certain user may be occupied by another user.
Jennings B, et al disclose, in "A self-adaptive service provisioning framework for 3G+/4G mobile aplications" (IEEE wireless communications, IEEE Service Center, Vol. 11, No. 5, 1 October 2004), a self-adaptive service provisioning middleware framework (ASPF), which, by interoperating with existing wireless and wire-line service delivery platforms, aims to enable seamless omnipresent service provisioning to mobile users any where, any time, and in any context.
Chakravorty R. et al. disclose, in "A framework for dynamic SLA-based QoS control for UMTS" (IEEE wireless communications, IEEE Communication Society, Vol. 10, No. 5, 1 October 2003), a framework and how dynamic SLA-based control can be used to achieve end-to-end QoS in a wired and wireless (UMTS) environment.
Araniti G et al. disclose, in "Adaptively controlling the QoS of multimedia wireless applications through "User Profiling" techniques" (IEEE Journal on Selected Areas in Communications, IEEE Service Center, Vol 21, No. 10, 1 December 2003), a mechanism that exploits user profiling techniques and suitable QoS mapping functions to introduce the soft QoS idea into a wireless multimedia scenario.

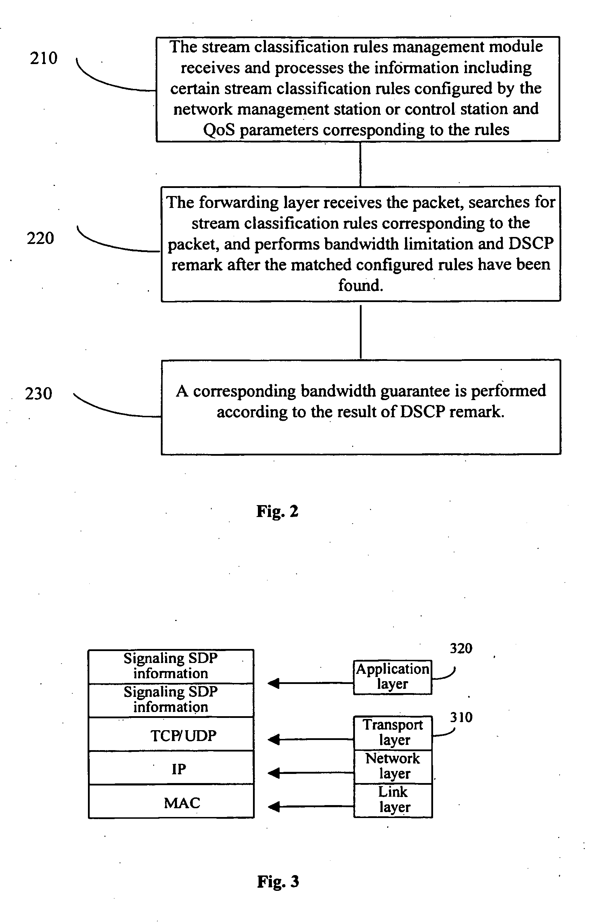

In the prior art, it is impossible to limit the bandwidth of different services for users. As shown in Figure 3, the audio, video and data of a user exist in the signaling Session Description Protocol (SDP) information over the transport layer 310 of an IP packet, as the feature code fields of the signaling packet. The existing stream classification method can match only up to the transport layer 310 at most, and thus can not identify the different features of users. In addition, it is impossible to respectively limit the bandwidth of different services, such as the audio, video and data of a user and the like.

### Summary of the Invention

Embodiments of the invention provide a method according to independent claim 1 and a system according to independent claim 10 for providing Quality of Service (QoS) service, which may perform QoS guarantee for different users as well as different types of services of a same user, so as to achieve the intelligent control of user traffics.

According to the embodiments of the invention, a signaling sorting method is employed to analyze various signaling packets, extract the signaling feature codes in the signaling packets, and perform bandwidth limitation and bandwidth guarantee for service packets according to the QoS information corresponding to the signaling feature codes. In this way, the bandwidth of users may not interfere with each other; the system may guarantee different bandwidth for different types of services of the users, so as to achieve the intelligent control of the user traffics.

### Brief Description of the Drawings

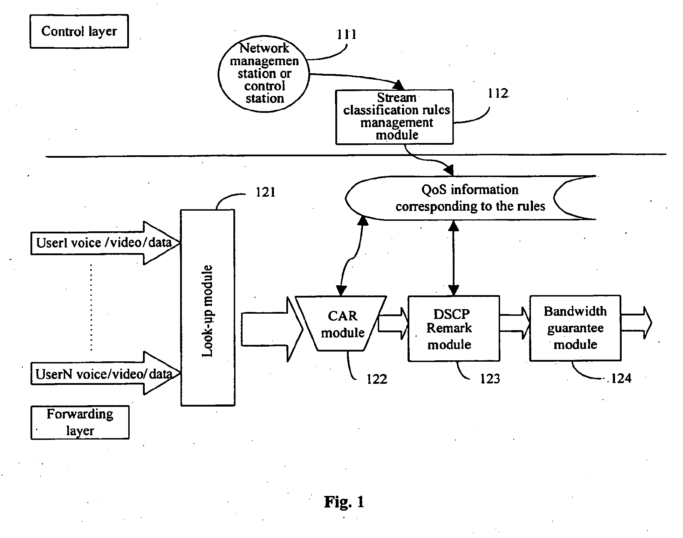

Figure 1 is a schematic diagram showing a QoS system based on stream classification in the prior art;

Figure 2 is a flow chart showing a process of providing QoS service based on stream classification in the prior art;

Figure 3 is a schematic diagram showing a signaling packet in the prior art;

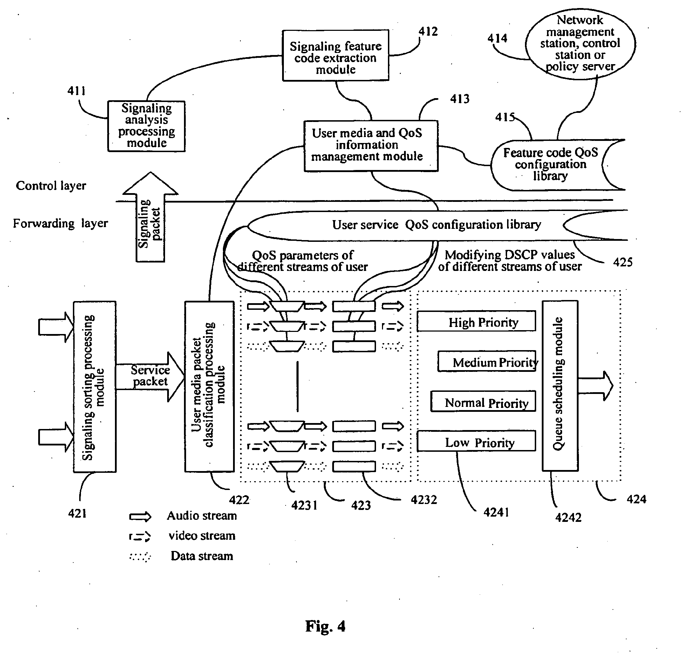

Figure 4 is a schematic diagram showing a QoS system based on signaling feature codes according to an embodiment of the invention;

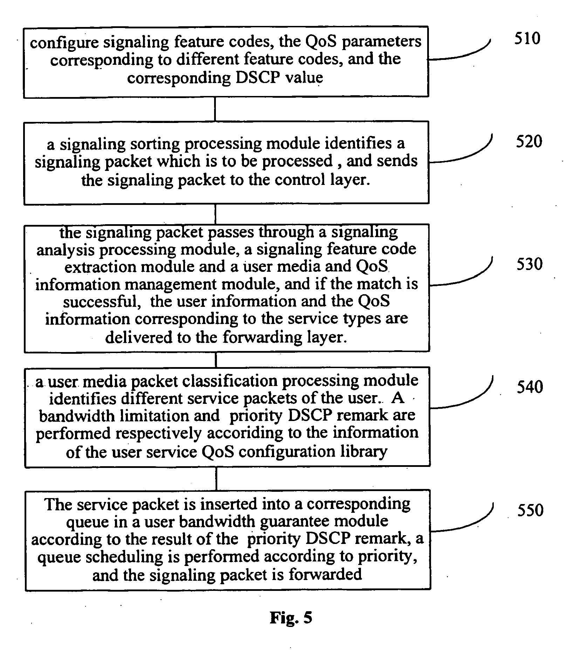

Figure 5 is a flow chart showing a method for providing QoS service according to an embodiment of the invention.

### Detailed Description of the Embodiments

Referring to Figure 4, a system for providing QoS service according to an embodiment of the invention is divided into a control layer and a forwarding layer. The control layer includes a signaling analysis processing module 411, a signaling feature code extraction module 412, a user media and QoS information management module 413, a network management station, control station or policy server 414 and a feature code QoS configuration library 415. The forwarding layer includes a signaling sorting processing module 421, a user media packet classification processing module 422, a user bandwidth limitation and priority remark module 423, a user bandwidth guarantee module 424, and a user service QoS configuration library 425.

The network management station, control station or policy server 414 is adapted to configure signaling feature codes, the QoS parameters corresponding to the different signaling feature codes, and the corresponding DSCP value, and store the signaling feature codes, the QoS parameters and the corresponding DSCP value into the feature code QoS configuration library 415. In other words, the QoS information, including QoS parameters and priority DSCP value, etc., is configured by the network management station, control station or policy server 414.

The QoS parameters includes time delay, bandwidth or resource reservation, etc. The signaling feature codes includes user identification, and service type identifications, etc. The user identification may be a telephone number or domain name of a user, and the service type identification may indicate the type of audio, video, and data, etc.

The signaling sorting processing module 421 is adapted to sort various signaling packets from user terminals and send the sorted signaling packets to the control layer. The signaling packets may be a signaling packet by which a soft terminal / hardware terminal registers to a system or calls the system, or may be a resource reservation signaling packet of a service policy server.

The signaling analysis processing module 411 and the signaling feature code extraction module 412 are adapted to analyze a signaling packet from the forwarding layer so as to obtain the signaling feature codes of the signaling packet.

The user media and QoS information management module 413 is adapted to query the feature code QoS configuration library 415 so as to obtain the QoS information matched with the signaling feature codes of the signaling packet, and deliver the user information and the QoS information corresponding to the signaling feature codes to the forwarding layer.

The user information and the QoS information corresponding to the signaling feature codes is stored in the user service QoS configuration library 425. In particular, the user service QoS configuration library 425 may contain the user information, the service type information and the QoS information corresponding to the service types of users.

The user media packet classification processing module 422 is adapted to classify the service packets from a user, and to identify different service packets of the user.

The user bandwidth limitation and priority remark module 423 is adapted to query the user service QoS configuration library 425 according to the service type information corresponding to the service packets, and perform bandwidth limitation and priority DSCP remark respectively.

In a particular implementation, The user bandwidth limitation and priority remark module 423 includes a bandwidth limitation module 4231 adapted to limit bandwidth according to the QoS information corresponding to the service type contained in user service QoS configuration information, and a priority DSCP remark module 4232 adapted to perform priority DSCP remark according to the QoS information corresponding to the service type contained in the user service Qos configuration information.

The user bandwidth guarantee module 424 is adapted to insert the service packet into a corresponding queue according to the result of DSCP priority remark, perform a queue scheduling according to priority and output the service packet.

In a particular implementation, the user bandwidth guarantee module 424 contains a plurality of queues 4241 with different priorities adapted to accommodate service packets with different priority remarks. The user bandwidth guarantee module 424 may further include a queue scheduling module 4242 adapted to perform queue scheduling according to the priorities.

Figure 5 is a flow chart showing a method for providing QoS service according to an embodiment of the invention.

Block 510: A network management station, control station or policy server configures signaling feature codes, the QoS parameters (e.g. the Qos parameters such as a bandwidth of 64Kbps guaranteed for audio, a bandwidth of 2Mbps guaranteed for video) corresponding to the different signaling feature codes, and the corresponding DSCP value, and stores the signaling feature codes, the QoS parameters and the corresponding DSCP value into a feature code QoS configuration library.

The QoS information, including the QoS parameters such as bandwidth and time delay and the priority remark DSCP value and the like, is configured by the network management station, control station or policy server.

In a particular implementation, the signaling feature code may be extracted from signaling protocol.

The signaling protocol refers to the application layer protocols for establishing, changing or terminating a multimedia session, for example, the Session Initiation Protocol (SIP), H.248, the Media Gateway Control Protocol (MGCP), etc. The signaling protocol employs text code, and supports the multimedia communication functions such as audio, video, instant message and game.

For example, in Session Initiation Protocol (SIP), some important signaling feature code fields may be extracted from the signaling protocol, as shown in Table 1.

**Table 1:**

| Signaling feature code | Explanation |
|---|---|
| Call-ID | Identification of a call |
| From | logical calling entity |
| To | Logical called entity (used with From, Call-ID for call match) |
| Contact | Real physical address, for routing |
| Via | Where a call passes through, used as the route of a response |
| Route | Route information of a call |
| Cseq | Sequence number of a call |
| Content-Length | Length of a message body |
| Content-Type | Type of a message body |
| Record-Route | Route which a call passes through (Route indicates the route of a call, and Record-Route is used for constructing a route) |

Block 520: A signaling sorting processing module of the forwarding layer identifies a signaling packet which is to be processed and is configured by the network management station, control station or policy server, and sends the signaling packet to the control layer.

Block 530: The signaling packet passes through a signaling analysis processing module and a signaling feature code extraction module of the control layer in order, and the signaling feature codes of the signaling packet are obtained. Then, a user media and QoS information management module queries the information in a feature code QoS configuration library according to the signaling feature codes obtained from the signaling packet to obtain the QoS information matched with the signaling feature codes. If the QoS information matched with the signaling feature codes is found, the user media and QoS information management module delivers the user information and the QoS information corresponding to the signaling feature codes to the forwarding layer.

Block 540: A user media packet classification processing module in the forwarding layer classifies service packets from the user, identifies the different service packets (such as, audio, video, and data packets) of the user. A user bandwidth limitation and priority remark module 423 queries a user service QoS configuration library according to the service type information corresponding to the service packets, and perform bandwidth limitation and DSCP priority remark and the like, respectively.

Block 550:

The service packets are inserted into a corresponding queue in a user bandwidth guarantee module according to the result of the DSCP priority remark. The principle for queuing is that, a user of higher priority enters into a queue of higher priority, while a user of lower priority enters into a queue of lower priority.

Then a queue scheduling is performed according to priority, and the service packets are forwarded.

According to some embodiments of the invention, a signaling sorting method is employed, to analyze signaling packets by which various soft terminals/hardware terminals register to a system and call the system, extract the signaling feature codes, such as the user information and the service type information, etc., from the signaling packet, and analyze whether the system has been configured with the QoS information corresponding to the signaling feature codes, and if the matched configuration information of the user is found, perform bandwidth limitation and bandwidth guarantee for service packets of different types of the user according to the QoS information. In this way, the bandwidth of different users will not interfere with each other, different types of services, such as audio, video and data, may be guaranteed with different bandwidth and different DSCP priority remarks. Thus, the intelligent control for user traffic may be achieved.

In addition, in some embodiments of the invention, when receiving a call termination signaling packet of a user, the control layer deletes the information of the user in the forwarding layer. In a particular implementation, after the signaling analysis processing module 411 and the signaling feature code extraction module 412 extract the signaling feature codes of the call termination signaling packet, the user media and QoS information management module notifies the forwarding layer to delete the information of the user contained in the user service QoS configuration library.

If a user initiates an attack, the user bandwidth limitation and priority remark module may identify and discard the attack packet(s) of the attacking user, so that the bandwidth of other normal users may not by preempted, and accordingly the call of the other users may not be influenced. Even if the system is attacked, the quality of calls may be guaranteed for the users that have registered successfully.

According to some embodiments of the invention, a signaling sorting method is employed, to analyze signaling packets by which various soft terminals/hardware terminals register to a system and call the system, as well as the resource reservation signaling packets delivered from the policy server, etc., extract the user information, such as the telephone number or domain name of the user and the audio, video and data information, from the signaling packet, and analyze whether the system has been configured with the QoS information corresponding the signaling feature codes, and if the matched configuration information of the user is found, perform bandwidth limitation and bandwidth guarantee according to the QoS information. In this way, the bandwidth of various users will not interfere with each other, different types of services, such as audio, video and data, may be guaranteed with different bandwidth and different DSCP priority remarks. Therefore, the intelligent control for user traffic may be achieved.

## Claims

1. A method for providing Quality of Service, QoS, service, **characterized by** comprising:
Querying, by a user media and QoS information management module (413) of a control layer, the QoS information in a feature code QoS configuration library (415) of the control layer according to signaling feature codes of a signaling packet, when receiving a signaling packet of a user or a resource reservation signaling packet delivered by a policy server, the signaling feature codes comprising user identifications and service type identifications;
delivering, by the user media and QoS information management module (413), user service QoS configuration information to a user service QoS configuration library (425) of a forwarding layer, the user service QoS configuration information including user information and the QoS information corresponding to the signaling feature codes;
storing the user service QoS configuration information in the user service QoS configuration library (425);
querying, by a user bandwidth limitation and priority remark module (423) of the forwarding layer, when receiving a service packet of the user, the user service QoS configuration information in the user service QoS configuration library (425) according to service information of the service packet; and
performing, by a user bandwidth guarantee module (424) of the forwarding layer, bandwidth guarantee for the service packet according to the queried user service QoS configuration information.

2. The method according to claim 1, **characterized in that,** storing the user service QoS configuration information comprises storing user information, service type information and QoS information corresponding to service types of users in the user service QoS configuration library.

3. The method according to claim 2, **characterized in that,** the QoS information comprises bandwidth, time delay and priority remark Differentiated Service Code Pointer, DSCP, value, and is configured by a network management station, control station or policy server.

4. The method according to claim 1, **characterized in that,** said querying a feature code QoS configuration library according to the signaling feature codes of the signaling packet comprises:
identifying the signaling packet to be processed, and sending the signaling packet to be extracted the signaling feature codes of the signaling packet; and
matching the QoS information corresponding to the signaling feature codes.

5. The method according to claim 4, **characterized in that,** the signaling feature codes comprise a user identification and service type identifications.

6. The method according to any one of claims 1 to 5, **characterized in that,** said querying the user service QoS configuration information comprises:
identifying service type of the service packet, and querying QoS information corresponding to the service type according to the service type of the service packet; and
said performing bandwidth guarantee for the service packet according to the query result comprises:
performing bandwidth limitation and priority Differentiated Service Code Pointer, DSCP, remark according to the QoS information corresponding to the service type contained in the user service QoS configuration information.

7. The method according to claim 6, **characterized in that,** said performing bandwidth guarantee for the service packet according to the query result further comprises: inserting the service packet into a corresponding priority queue according to the priority DSCP remark, performing queue scheduling according to priorities, and forwarding the service packet.

8. The method according to claim 1, **characterized by** further comprising: deleting information of the user in the user service QoS configuration library when receiving a call termination signaling packet from the user.

9. The method according to claim 1, **characterized by** further comprising: discarding an attack packet from a user, and preventing the user to preempt bandwidth of other normal users.

10. A system for providing Quality of Service, QoS, service **characterized by** comprising:
a user media and QoS information management module (413) of a control layer, adapted for querying for QoS information matched with signaling feature codes of a signaling packet of a user in a feature code QoS configuration library (415) of the control layer, and delivering user service QoS configuration information to a user service QoS configuration library (425) of a forwarding layer, wherein the signaling feature codes comprises user identifications and service type identifications, the user service QoS configuration information includes the user information and the QoS information corresponding to the signaling feature codes;
the user service QoS configuration library (425) adapted for storing the user service QoS configuration information;
a user bandwidth limitation and priority remark module (423) of the forwarding layer, adapted for querying the user service QoS configuration information in the user service QoS configuration library (425) according to service information of a service packet of the user, and performing bandwidth limitation and priority DSCP remark according to a querying result; and
a user bandwidth guarantee module (424) of the forwarding layer, adapted for performing bandwidth guarantee according to the processing by the user bandwidth limitation and priority remark module (423) to the service packet.

11. The system according to claim 10, **characterized by** further comprising a user media packet classification processing module (422) adapted for identifying service information of the service packet and transmitting the service information to the user bandwidth limitation and priority remark module (423); the service information comprising service type.

12. The system according to claim 11, **characterized in that,** the user bandwidth limitation and priority remark module (423) comprises:
a bandwidth limitation module (4231) adapted for limiting bandwidth according to QoS information corresponding to the service type contained in user service Qos configuration information; and
a priority DSCP remark module (4232) adapted for performing priority DSCP remark according to the QoS information corresponding to the service type contained in the user service Qos configuration information.

13. The system according to claim 12, **characterized in that,** the user bandwidth guarantee module (424) comprises a plurality of queues with different priorities adapted for accommodating service packets with different priority remarks and a queue scheduling module adapted for performing queue scheduling according to the priorities.

14. The system according to claim 10, **characterized by** further comprising:
a network management station, control station or policy server (414), adapted for configuring the signaling feature codes, QoS parameters corresponding to different signaling feature codes and a corresponding DSCP value; and
a feature code QoS configuration library (415), adapted for storing information configured by the network management station, control station or policy server (414) so as to be queried by the user media and QoS information management module.

15. The system according to claim 10, **characterized by** further comprising:
a signaling sorting processing module (421), adapted for sorting service packets from user terminals, and sending the sorted signaling packets to a signaling analysis processing module (411); and
the signaling analysis processing module (411) and a signaling feature code extraction module (412), adapted for analyzing the signaling packets forwarding from the signaling sorting processing module (421), obtaining signaling feature codes of the service packets and sending the signaling feature codes to the user media and QoS information management module (413).

## Patentansprüche

1. Verfahren zur Bereitstellung eines Dienstgüte- bzw. QoS-Diensts, **gekennzeichnet durch** die folgenden Schritte:
Abfragen der QoS-Informationen **durch** ein Benutzermedien- und QoS-Informationsverwaltungsmodul (413) einer Steuerschicht in einer Merkmalcode-QoS-Konfigurationsbibliothek (415) der Steuerschicht gemäß Signalisierungsmerkmalcodes eines Signalisierungspakets beim Empfang eines Signalisierungspakets eines Benutzers oder eines Betriebsmittelreservierungs-Signalisierungspakets, das durch einen Richtlinienserver abgeliefert wird, wobei die Signalisierungsmerkmalcodes Benutzeridentifikationen und Diensttypidentifikationen umfassen;
Abliefern von Benutzerdienst-QoS-Konfigurationsinformationen **durch** das Benutzermedien- und QoS-Informationsverwaltungsmodul (413) an eine Benutzerdienst-QoS-Konfigurationsbibliothek (425) einer Weiterleitungsschicht, wobei die Benutzerdienst-QoS-Konfigurationsinformationen Benutzerinformationen und die QoS-Informationen entsprechend den Signalisierungsmerkmalcodes umfassen;
Speichern der Benutzerdienst-QoS-Konfigurationsinformationen in der Benutzerdienst-QoS-Konfigurationsbibliothek (425);
Abfragen der Benutzerdienst-QoS-Konfigurationsinformationen **durch** ein Benutzerbandbreitenbegrenzungs- und Prioritätsanmerkungsmodul (423) der Weiterleitungsschicht in der Benutzerdienst-QoS-Konfigurationsbibliothek (425) beim Empfang eines Dienstpakets des Benutzers gemäß Dienstinformationen des Dienstpakets; und
Durchführen einer Bandbreitengarantie **durch** ein Benutzerbandbreiten-Garantiemodul (424) der Weiterleitungsschicht für das Dienstpaket gemäß den abgefragten Benutzerdienst-QoS-Konfigurationsinformationen.

2. Verfahren nach Anspruch 1, **dadurch gekennzeichnet, dass** das Speichern der Benutzerdienst-QoS-Konfigurationsinformationen Folgendes umfasst: Speichern von Benutzerinformationen, Diensttypinformationen und QoS-Informationen entsprechend Diensttypen von Benutzern in der Benutzerdienst-QoS-Konfigurationsbibliothek.

3. Verfahren nach Anspruch 2, **dadurch gekennzeichnet, dass** die QoS-Informationen Bandbreite, Zeitverzögerung und Wert des Differentiated Service Code Pointer DSCP der Prioritätsanmerkung umfassen und durch eine Netzwerkverwaltungsstation, eine Steuerstation oder einen Richtlinienserver konfiguriert werden.

4. Verfahren nach Anspruch 1, **dadurch gekennzeichnet, dass** das Abfragen einer Merkmalcode-QoS-Konfigurationsbibliothek gemäß den Signalisierungsmerkmalcodes des Signalisierungspakets Folgendes umfasst:
Identifizieren des zu verarbeitenden Signalisierungspakets und Senden des Signalisierungspakets zur Extrahierung der Signalisierungsmerkmalcodes des Signalisierungspakets; und
Abstimmen der QoS-Informationen entsprechend den Signalisierungsmerkmalcodes.

5. Verfahren nach Anspruch 4, **dadurch gekennzeichnet, dass** die Signalisierungsmerkmalcodes eine Benutzeridentifikation und Diensttypidentifikationen umfassen.

6. Verfahren nach einem der Ansprüche 1 bis 5, **dadurch gekennzeichnet, dass** das Abfragen der Benutzerdienst-QoS-Konfigurationsinformationen Folgendes umfasst:
Identifizieren des Diensttyps des Dienstpakets und Abfragen von QoS-Informationen entsprechend dem Diensttyp gemäß dem Diensttyp des Dienstpakets; und
das Durchführen einer Bandbreitengarantie für das Dienstpaket gemäß dem Abfrageergebnis Folgendes umfasst:
Durchführen einer Bandbreitenbegrenzungs- und Prioritätsanmerkung des Differentiated Service Code Pointer DSCP gemäß den QoS-Informationen entsprechend dem in den Benutzerdienst-QoS-Konfigurationsinformationen enthaltenen Diensttyp.

7. Verfahren nach Anspruch 6, **dadurch gekennzeichnet, dass** das Durchführen einer Bandbreitengarantie für das Dienstpaket gemäß dem Abfrageergebnis ferner Folgendes umfasst: Einfügen des Dienstpakets in eine entsprechende Prioritätswarteschlange gemäß der Prioritäts-DSCP-Anmerkung, Durchführen von Warteschlangen-Scheduling gemäß Prioritäten und Weiterleiten des Dienstpakets.

8. Verfahren nach Anspruch 1, ferner **gekennzeichnet durch** die folgenden Schritte:
Löschen von Informationen des Benutzers in der Benutzerdienst-QoS-Konfigurationsbibliothek beim Empfang eines Anrufabschluss-Signalisierungspakets von dem Benutzer.

9. Verfahren nach Anspruch 1, ferner **gekennzeichnet durch** die folgenden Schritte:
Verwerfen eines Attackenpakets von einem Benutzer und Verhindern, dass der Benutzer Bandbreite anderer normaler Benutzer vorbelegt.

10. System zur Bereitstellung eines Dienstgüte- bzw. QoS-Diensts, **dadurch gekennzeichnet, dass** es Folgendes umfasst:
ein Benutzermedien- und QoS-Informationsverwaltungsmodul (413) einer Steuerschicht, das dafür ausgelegt ist, in einer Merkmalcode-QoS-Konfigurationsbibliothek (415) der Steuerschicht nach mit Signalisierungsmerkmalcodes eines Signalisierungspakets eines Benutzers abgestimmten QoS-Informationen abzufragen und Benutzerdienst-QoS-Konfigurationsinformationen an eine Benutzerdienst-QoS-Konfigurationsbibliothek (425) einer Weiterleitungsschicht abzuliefern, wobei die Signalisierungsmerkmalcodes Benutzeridentifikationen und Diensttypidentifikationen umfassen und die Benutzerdienst-QoS-Konfigurationsinformationen die Benutzerinformationen und die QoS-Informationen entsprechend den Signalisierungsmerkmalcodes umfassen;
die Benutzerdienst-QoS-Konfigurationsbibliothek (425), die dafür ausgelegt ist, die Benutzerdienst-QoS-Konfigurationsinformationen zu speichern;
ein Benutzerbandbreitenbegrenzungs- und Prioritätsanmerkungsmodul (423) der Weiterleitungsschicht, das dafür ausgelegt ist, die Benutzerdienst-QoS-Konfigurationsinformationen in der Benutzerdienst-QoS-Konfigurationsbibliothek (425) gemäß Dienstinformationen eines Dienstpakets des Benutzers abzufragen und
gemäß einem Abfrageergebnis eine Bandbreitenbegrenzungs- und Prioritäts-DSCP-Anmerkung durchzuführen; und
ein Benutzerbandbreiten-Garantiemodul (424) der Weiterleitungsschicht, das dafür ausgelegt ist, gemäß der Verarbeitung durch das Benutzerbandbreitenbegrenzungs- und Prioritätsanmerkungsmodul (423) an dem Dienstpaket eine Bandbreitengarantie durchzuführen.

11. System nach Anspruch 10, **dadurch gekennzeichnet, dass** es ferner ein Benutzermedienpaket-Klassifikationsverarbeitungsmodul (422) umfasst, das dafür ausgelegt ist, Dienstinformationen des Dienstpakets zu identifizieren und die Dienstinformationen zu dem Benutzerbandbreitenbegrenzungs- und Prioritätsanmerkungsmodul (423) zu senden; wobei die Dienstinformationen Diensttyp umfassen.

12. System nach Anspruch 11, **dadurch gekennzeichnet, dass** das Benutzerbandbreitenbegrenzungs- und Prioritätsanmerkungsmodul (423) Folgendes umfasst:
ein Bandbreitenbegrenzungsmodul (4231), das dafür ausgelegt ist, Bandbreite gemäß in den Benutzerdienst-QoS-Konfigurationsinformationen enthaltenen QoS-Informationen entsprechend dem Diensttyp zu begrenzen; und
ein Prioritäts-DSCP-Anmerkungsmodul (4232), das dafür ausgelegt ist, gemäß den in den Benutzerdienst-QoS-Konfigurationsinformationen enthaltenen QoS-Informationen entsprechend dem Diensttyp eine Prioritäts-DSCP-Anmerkung durchzuführen.

13. System nach Anspruch 12, **dadurch gekennzeichnet, dass** das Benutzerbandbreiten-Garantiemodul (424) Folgendes umfasst: mehrere Warteschlangen mit verschiedenen Prioritäten, die dafür ausgelegt sind, Dienstpakete mit verschiedenen Prioritätsanmerkungen unterzubringen, und ein Warteschlangen-Scheduling-Modul, das dafür ausgelegt ist, Warteschlangen-Scheduling gemäß den Prioritäten durchzuführen.

14. System nach Anspruch 10, **dadurch gekennzeichnet, dass** es ferner Folgendes umfasst:
eine Netzwerkverwaltungsstation, eine Steuerstation oder einen Richtlinienserver (414), die bzw. der dafür ausgelegt ist, die Signalisierungsmerkmalcodes, QoS-Parameter entsprechend verschiedenen Signalisierungsmerkmalcodes und einen entsprechenden DSCP-Wert zu konfigurieren; und
eine Merkmalcode-QoS-Konfigurationsbibliothek (415), die dafür ausgelegt ist, durch die Netzwerkverwaltungsstation, die Steuerstation oder den Richtlinienserver (414) konfigurierte Informationen zu speichern, um so durch das Benutzermedien- und QoS-Informationsverwaltungsmodul abgefragt zu werden.

15. System nach Anspruch 10, **dadurch gekennzeichnet, dass** es ferner Folgendes umfasst:
ein Signalisierungs-Sortierverarbeitungsmodul (421), das dafür ausgelegt ist, Dienstpakete von Benutzerendgeräten zu sortieren und die sortierten Signalisierungspakete zu einem Signalisierungs-Analyseverarbeitungsmodul (411) zu senden; und
das Signalisierungs-Analyseverarbeitungsmodul (411) und ein Signalisierungs-Merkmalcode-Extraktionsmodul (412), die dafür ausgelegt sind, die von dem Signalisierungs-Sortierverarbeitungsmodul (421) weitergeleiteten Signalisierungspakete zu analysieren, Signalisierungsmerkmalcodes der Dienstpakete zu erhalten und
die Signalisierungsmerkmalcodes zu dem Benutzermedien- und QoS-Informationsverwaltungsmodul (413) zu senden.

## Revendications

1. Procédé de prestation d'un service de Qualité de Service, QoS, **caractérisé en ce qu'**il comprend :
l'interrogation, par un module de gestion de support utilisateur et d'informations QoS (413) d'une couche de commande, des informations QoS dans une bibliothèque de configurations QoS à code de fonction (415) de la couche de commande en fonction de codes de fonction de signalisation d'un paquet de signalisation, lors de la réception d'un paquet de signalisation d'un utilisateur ou d'un paquet de signalisation de réservation de ressources fourni par un serveur de règles, les codes de fonction de signalisation comprenant des identifications d'utilisateur et des identifications de types de services ;
la fourniture, par le module de gestion de support utilisateur et d'informations QoS (413), d'informations de configuration QoS de service utilisateur à une bibliothèque de configurations QoS de service utilisateur (425) d'une couche de réacheminement, les informations de configuration QoS de service utilisateur comportant des informations d'utilisateur et les informations QoS correspondant aux codes de fonction de signalisation ;
la mémorisation des informations de configuration QoS de service utilisateur dans la bibliothèque de configurations QoS de service utilisateur (425) ;
l'interrogation, par un module de limitation de largeur de bande utilisateur et de remarque de priorité (423) de la couche de réacheminement, lors de la réception d'un paquet de service de l'utilisateur, des informations de configuration QoS de service utilisateur dans la bibliothèque de configurations QoS de service utilisateur (425) en fonction des informations de service du paquet de service ; et
l'exécution, par un module de garantie de largeur de bande utilisateur (424) de la couche de réacheminement, de la garantie de largeur de bande du paquet de service en fonction des informations de configuration QoS de service utilisateur interrogées.

2. Procédé selon la revendication 1, **caractérisé en ce que** la mémorisation des informations de configuration QoS de service utilisateur comprend la mémorisation d'informations d'utilisateur, d'informations de types de services et d'informations QoS correspondant aux types de services d'utilisateurs dans la bibliothèque de configurations QoS de service utilisateur.

3. Procédé selon la revendication 2, **caractérisé en ce que** les informations QoS comprennent une valeur de Pointeur de Code de Service Différentiel, DSCP, de largeur de bande, de retard et de remarque de priorité, et sont configurées par une station de gestion de réseau, une station de commande ou un serveur de règles.

4. Procédé selon la revendication 1, **caractérisé en ce que** ladite interrogation d'une bibliothèque de configurations QoS à code de fonction selon les codes de fonction de signalisation du paquet de signalisation comprend :
l'identification du paquet de signalisation à traiter, et l'envoi au paquet de signalisation à extraire des codes de fonction de signalisation du paquet de signalisation ; et
la mise en correspondance des informations QoS correspondant aux codes de fonction de signalisation.

5. Procédé selon la revendication 4, **caractérisé en ce que** les codes de fonction de signalisation comprennent une identification d'utilisateur et des identifications de types de services.

6. Procédé selon l'une quelconque des revendications 1 à 5, **caractérisé en ce que** ladite interrogation des informations de configuration QoS de service utilisateur comprend :
l'identification du type de service du paquet de service, et l'interrogation des informations QoS correspondant au type de service en fonction du type de service du paquet de service ; et
ladite exécution de la garantie de largeur de bande pour le paquet de service en fonction du résultat de l'interrogation comprend :
l'exécution de la limitation de largeur de bande et de la remarque de Pointeur de Code de Service Différentiel, DSCP, de priorité selon les informations QoS correspondant au type de service contenu dans les informations de configuration QoS de service d'utilisateur.

7. Procédé selon la revendication 6, **caractérisé en ce que** ladite exécution de la garantie de largeur de bande pour le paquet de service en fonction du résultat d'interrogation comprend en outre : l'insertion du paquet de service dans une file d'attente de priorité correspondante en fonction de la remarque DSCP de priorité, l'exécution d'un ordonnancement des files d'attente en fonction des priorités et le réacheminement du paquet de service.

8. Procédé selon la revendication 1, **caractérisé en ce qu'**il comprend en outre : la suppression d'informations de l'utilisateur dans la bibliothèque de configurations QoS de service utilisateur lors de la réception d'un paquet de signalisation de fin d'appel depuis l'utilisateur.

9. Procédé selon la revendication 1, **caractérisé en ce qu'**il comprend en outre : le rejet d'un paquet d'attaque provenant d'un utilisateur, et l'empêchement de l'utilisateur de s'approprier la largeur de bande d'autres utilisateurs normaux.

10. Système de prestation d'un service de Qualité de Service, QoS, **caractérisé en ce qu'**il comprend :
un module de gestion de support utilisateur et d'informations QoS (413) d'une couche de commande, adapté pour interroger des informations QoS mises en correspondance avec des codes de fonction de signalisation d'un paquet de signalisation d'un utilisateur dans une bibliothèque de configurations QoS à code de fonction (415) de la couche de commande et fournir des informations de configuration QoS de service utilisateur à une bibliothèque de configurations QoS de service utilisateur (425) d'une couche de réacheminement, les codes de fonction de signalisation comprenant des identifications d'utilisateurs et des identifications de types de services, les informations de configurations QoS de service utilisateur comportant les informations d'utilisateur et les informations QoS correspondant aux codes de fonction de signalisation ;
la bibliothèque de configurations QoS de service utilisateur (425) adaptée pour mémoriser les informations de configuration QoS de service utilisateur ;
un module de limitation de largeur de bande utilisateur et de remarque de priorité (423) de la couche de réacheminement, adapté pour interroger les informations de configurations QoS de service utilisateur dans la bibliothèque de configurations QoS de service utilisateur (425) en fonction d'informations de service d'un paquet de service de l'utilisateur, et pour exécuter une limitation de largeur de bande et une remarque DSPC de priorité en fonction d'un résultat d'interrogation ; et
un module de garantie de largeur de bande utilisateur (424) de la couche de réacheminement, adapté pour exécuter la garantie de largeur de bande en fonction du traitement par le module de limitation de largeur de bande d'utilisateur et de remarque de priorité (423) au paquet de service.

11. Système selon la revendication 10, **caractérisé en ce qu'**il comprend en outre un module de traitement de classification de paquets de support utilisateur (422) adapté pour identifier des informations de service du paquet de service et transmettre les informations de service au module de limitation de largeur de bande d'utilisateur et de remarque de priorité (423) ; les informations de service comprenant le type de service.

12. Système selon la revendication 11, **caractérisé en ce que** le module de limitation de largeur de bande d'utilisateur et de remarque de priorité (423) comprend :
un module de limitation de largeur de bande (4231) adapté pour limiter la largeur de bande en fonction d'informations QoS correspondant au type de service contenu dans les informations de configuration QoS de service utilisateur ; et
un module de remarque DSCP de priorité (4232) adapté pour exécuter une remarque DSCP de priorité en fonction des informations QoS correspondant au type de service contenu dans les informations de configuration QoS de service utilisateur.

13. Système selon la revendication 12, **caractérisé en ce que** le module de garantie de largeur de bande d'utilisateur (424) comprend une pluralité de files d'attente aux différentes priorités adaptée pour accepter des paquets de service ayant différentes remarques de priorité et un module d'ordonnancement de files d'attente adapté pour exécuter un ordonnancement des files d'attente en fonction des priorités.

14. Système selon la revendication 10, **caractérisé en ce qu'**il comprend en outre :
une station de gestion de réseau, une station de commande ou un serveur de règles (414), adapté pour configurer les codes de fonction de signalisation, des paramètres QoS correspondant aux différents codes de fonction de signalisation et à une valeur DSCP correspondante ; et
une bibliothèque de configurations QoS à code de fonction (415) adaptée pour mémoriser les informations configurées par la station de gestion de réseau, la station de commande ou le serveur de règles (414) de façon à être interrogée par le module de gestion de support utilisateur et d'informations QoS.

15. Système selon la revendication 10, **caractérisé en ce qu'**il comprend en outre :
un module de traitement de tri de signalisation (421), adapté pour trier les paquets de service provenant de terminaux utilisateurs, et envoyer les paquets de signalisation triés à un module de traitement d'analyse de signalisation (411) ; et
le module de traitement d'analyse de signalisation (411) et un module d'extraction de code de fonction de signalisation (412), adaptés pour analyser les paquets de signalisation réacheminés depuis le module de traitement de tri de signalisation (421), obtenir des codes de fonction de signalisation des paquets de service et
envoyer les codes de fonction de signalisation au module de gestion de support utilisateur et d'informations QoS (413).
